# EUROPÄISCHE PATENTSCHRIFT

(11) **EP 2 675 767 B1**
(45) Veröffentlichungstag und Bekanntmachung des Hinweises auf die Patenterteilung: **21.08.2019**
(21) Anmeldenummer: 12705980.6
(22) Anmeldetag: 17.02.2012
(51) Int. Cl.: C03C 29/00, C03C 3/19, C03C 4/20, C03C 8/24, H01M 2/06, C03C 17/02, B23K 15/00, B23K 26/32, C03C 8/00, C03C 27/02, H01M 2/24, H01M 2/30, H01M 10/0525, B23K 1/19, H01M 2/08, H01M 10/0569, B23K 101/36, B23K 103/10

(54) **DURCHFÜHRUNG**
FEED-THROUGH
PASSAGE

(30) Priorität: 18.02.2011 DE 102011011705; 25.02.2011 DE 102011012430; 01.04.2011 DE 102011015869; 10.06.2011 DE 102011103975; 10.06.2011 DE 102011103976; 07.07.2011 DE 102011106873
(43) Veröffentlichungstag der Anmeldung: 25.12.2013
(60) Teilanmeldung: 19185552.7
(73) Patentinhaber: Schott AG, 55122 Mainz (DE)
(72) Erfinder: KROLL, Frank, 84036 Landshut (DE); HARTL, Helmut, A-1210 Wien (AT); ROTERS, Andreas, 55118 Mainz (DE); ESEMANN, Hauke, 55286 Woerrstadt (DE); GOEDEKE, Dieter, 65812 Bad Soden (DE); DAHLMANN, Ulf, 55239 Gau-Odernheim (DE); PICHLER-WILHELM, Sabine, 84028 Landshut (DE); LANDENDINGER, Martin, 84061 Ergoldsbach (DE); BACKNAES, Linda, Johanna, 84036 Landshut (DE)
(74) Vertreter: Sawodny, Michael-Wolfgang
(86) Internationale Anmeldenummer: PCT/EP2012/000700
(87) Internationale Veröffentlichungsnummer: WO 2012/110244

(56) Entgegenhaltungen:
- EP-A1- 0 907 215
- US-A- 5 262 364
- US-A1- 2003 134 194
- DATABASE WPI Week 198431 7. Dezember 1983 (1983-12-07) Thomson Scientific, London, GB; AN 1984-194386 XP002677543, -& SU 1 058 909 A1 (KOSTANYAN K A) 7. Dezember 1983 (1983-12-07)
- DATABASE WPI Week 199151 11. November 1991 (1991-11-11) Thomson Scientific, London, GB; AN 1991-373959 XP002677633, -& JP 3 252331 A (NIPPON KOGAKU KK) 11. November 1991 (1991-11-11)

## Beschreibung

Die Erfindung betrifft eine Durchführung mit einem Grundkörper, insbesondere in Form eines scheibenförmigen Metallteiles, und einem durch eine Öffnung im Grundkörper hindurchgeführten Leiter, insbesondere stiftförmigen Leiter, der von einem Glas oder einer Glaskeramik umschlossen wird.

Bei dem Einbringen von Leitern, insbesondere in Form von Metallstiften in einen Grundkörper, insbesondere scheibenförmigen Metallteilen, die aus Leichtmetallen wie beispielsweise Aluminium bestanden, waren bislang hermetisch dichte Durchführungen nicht möglich. Aluminium wird aber als Material insbesondere für Ackumulatoren, bevorzugt für Lithium-Ionen-Batterien, diskutiert. Lithium-Ionen-Batterien sind für verschiedene Anwendungen vorgesehen, wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydrid-batterien ersetzen.

Als Batterie im Sinne der Erfindung wird sowohl eine Einwegbatterie, die nach ihrer Entladung entsorgt und/oder recycelt wird, als auch ein Akkumulator verstanden.

Lithium-Ionen-Batterien sind seit vielen Jahren bekannt. Diesbezüglich wird beispielsweise auf "Handbook of Batteries, David Linden, Herausgeber, 2. Auflage, McGrawhill, 1995, Kapitel 36 und 39" verwiesen.

Verschiedene Aspekte von Lithium-Ionen-Batterien sind in einer Vielzahl von Patenten beschrieben. Beispielsweise seien genannt US 961,672, US 5,952,126, US 5,900,183, US 5,874,185, US 5,849,434, US 5,853,914 sowie US 5,773,959.

Insbesondere für die Anwendung von Batterien, bevorzugt Lithium-Ionen-Batterien in der Automobil-Umgebung müssen eine Vielzahl von Problemen wie Korrosionsbeständigkeit, Beständigkeit bei Unfall oder Schwingungsfestigkeit gelöst werden. Ein weiteres Problem ist die hermetische Dichtheit der Batterie, insbesondere der Lithium-Ionen-Batterie über einen langen Zeitraum. Die Dichtheit beeinträchtigen können z. B. Undichtigkeit im Bereich der Elektroden der Batterie beziehungsweise der Elektrodendurchführung der Batterie, ein Batteriekurzschluss oder Temperaturänderungen, die zu einer verminderten Batterielebensdauer führen.

Um eine bessere Beständigkeit bei Unfall sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird. Der Stromanschluss ist durch einen Kunststoff isoliert. Nachteilig an den Kunststoffisolierungen ist die limitierte Temperaturbeständigkeit und die unsichere Dichtheit über der Lebensdauer.

Aus der DE 27 33 948 A1 ist eine Alkalibatterie bekanntgeworden, bei der ein Isolator wie z. B. Glas oder Keramik unmittelbar durch eine Schmelzverbindung mit einem Metallteil verbunden ist.

Eines der Metallteile ist elektrisch mit einer Anode der Alkalibatterie und das andere elektrisch mit einer Kathode der Alkalibatterie verbunden. Bei den in der DE 27 33 948 A1 verwandten Metallen handelt es sich um Eisen oder Stahl. Leichtmetalle wie Aluminium sind in der DE 27 33 948 A1 nicht beschrieben. Auch die Verschmelztemperatur des Glas- oder Keramikmaterials ist in der DE 27 33 948 A1 nicht angegeben. Bei der in der DE 27 33 948 A1 beschriebenen Alkalibatterie handelt es sich um eine Batterie mit einem alkalischen Elektrolyten, der gemäß der DE 27 33 948 A1 Natriumhydroxid oder Kaliumhydroxyt enthält. Eine Erwärmung von Li-Ionen-Batterien findet sich in der DE 27 33 948 A1 nicht.

Aus der DE 698 04 378 T2 bzw. der EP 0 885 874 B1 ist ein Verfahren zur Herstellung von asymmetrischen organischen Carbonsäureestern und zur Herstellung von wasserfreien organischen Elektrolyten für Alkali-Ionen-Batterien bekanntgeworden. Auch Elektrolyte für wiederaufladbare Lithium-Ionenzellen sind in der DE 698 04 378 T2 bzw. EP 0 885 874 B1 beschrieben.

Die DE 699 23 805 T2 bzw. EP 0 954 045 B1 beschriebt eine RF-Durchführung mit verbesserter elektrischer Wirksamkeit. Bei den aus der EP 0 954 045 B1 bekannten Durchführungen handelt es sich nicht um eine Glas-Metall-Durchführung. In der EP 0 954 045 B1 werden Glas-Metall-Durchführungen, die unmittelbar innerhalb beispielsweise der Metallwand einer Verpackung ausgebildet werden als nachteilig beschrieben, da derartige RF-Durchführungen auf Grund der Versprödung des Glases nicht dauerhaft sind.

Die DE 690 230 71 T2 bzw. EP 0 412 655 B1 beschreibt eine Glas-Metall-Durchführung für Batterien oder andere elektrochemische Zellen, wobei als Gläser Gläser mit einem SiO₂-Gehalt von ungefähr 45 Gew.-% verwandt werden und als Metalle, insbesondere Legierungen verwandt werden, die Molybdän und/oder Chrom und/oder Nickel umfassen, verwandt werden. Die Verwendung von Leichtmetallen ist in der DE 690 23 071 T2 ebenso wenig beschrieben wie Verschmelztemperaturen bzw. Verschmelzungstemperaturen für die verwandten Gläser. Auch die Materialien für die stiftförmigen Leiter sind gemäß DE 690230 71 T2 bzw. EP 0 412 655 B1 Legierungen, die Molybdän, Niob oder Tantal umfassen.

Die US 7,687,200 zeigt eine Glas-Metall-Durchführung für Lithium-Ionen-Batterien. Gemäß der US 7,687,200 ist das Gehäuse aus Edelstahl und der stiftförmige Leiter aus Platin/Iridium. Als Glasmaterialien sind in der US 7,687,200 die Gläser TA23 und CABAL-12 angegeben. Gemäß der US 5,015,530 handelt es sich dabei um CaO-MgO-Al₂O₃-B₂O₃-Systeme mit Verschmelztemperaturen von 1025° C bzw. 800° C. Des Weiteren sind aus der US 5,015,530 Glaszusammensetzungen für Glas-Metall-Durchführungen für Lithium-Batterien bekannt geworden, die CaO, Al₂O₃, B₂O₃, SrO und BaO umfassen, deren Verschmelztemperaturen im Bereich 650° C - 750° C liegen und damit zu hoch für eine Verwendung zusammen mit Leichtmetallen

Darüber hinaus ist Barium in vielen Anwendungen unerwünscht, da es als umweltschädlich und gesundheitsgefährdend erachtet wird. Ebenso in der Diskussion ist Strontium, auf dessen Einsatz zukünftig ebenfalls verzichtet werden sollte.

Des Weiteren weisen die Glaszusammensetzungen gemäß der US 7,687,200 einen Ausdehnungskoeffizient α im Temperaturbereich von 20° C bis 300° C von lediglich α ≈ 9 · 10⁻⁶/K auf.

Aus der US 2003/0134194A1 ist eine hermetisch dichte Glas-Metall-Durchführung für Lithium-Ionen-Batterien bekanntgeworden, wobei als Glasmaterial für die Glas-Metall-Durchführung ein einziges Glasmaterial verwandt wird.

Aus der US 5,262,364 ist eine Glaszusammensetzung zum hermetisch dichten Abschluss von Materialien mit hoher thermischer Ausdehnung offenbart, die 5 bis 15 mol-% PbO, BaO umfasst.

Die SU 1 058 909 A1 offenbart eine weitere Glaszusammensetzung zur Verwendung in Glas-Metall-Dichtungen, wobei als Metall Aluminium eingesetzt werden kann.

Aufgabe der Erfindung ist es, eine Durchführung anzugeben, die die Probleme des Standes der Technik vermeidet.

Erfindungsgemäß wird dies durch eine Durchführung für eine elektrische Speichereinrichtung gemäß Anspruch 1, ein Gehäuse gemäß Anspruch 15 sowie eine elektrische Speichereinrichtung gemäß Anspruch 16 gelöst. Die erfindungsgemäßeDurchführung umfasst einen Grundkörper, insbesondere in Form eines bevorzugt scheibenförmigen Metallteiles, wobei der Grundkörper wenigstens eine Öffnung aufweist, durch die ein Leiter, insbesondere ein im Wesentlichen stiftförmiger Leiter in einem Glas- oder Glaskeramikmaterial hindurchgeführt wird. Das scheibenförmige Metallteil kann eine beliebige Form aufweisen, insbesondere kann es rund, d. h. kreisrund, oval oder eckig ausgebildet sein.

Um zu verhindern, dass beim Einglasen das Leichtmetall des Grundkörpers und eventuell auch des Metallstiftes schmilzt oder deformiert, ist vorgesehen, dass das Glas- oder Glaskeramikmaterial eine Verschmelztemperatur mit einem Metall, insbesondere einem niedrig schmelzenden Material des Grundkörpers aufweist, die unterhalb der Schmelztemperatur des niedrig schmelzenden Metalls liegt.

Des weiteren zeichnet sich die Durchführung dadurch aus, dass auf das Glas- und Glaskeramikmaterial ein Deckglas oder eine Kunststoffschicht aufgebracht ist, wobei das Deckglas oder die Kunststoffschicht die chemische Beständigkeit dees Glas- oder Glaskeramikmaterials erhöht und im Falle von Glas eine ausreichende chemische Beständigkeit gegenüber Säuren und/oder Wasser aufweist.

Glas- oder Glaskeramikmaterialien, die dazu dienen, wie in vorliegendem Ausführungsbeispiel eine Fügeverbindung beziehungsweise Druckeinglasung zur Verfügung zu stellen, werden auch als Glaslote bezeichnet. Bei den erfindungsgemäßen Durchführungen liegt die Verschmelztemperatur beispielsweise im Bereich von 400° C bis 650° C.

Bei Druckglasdurchführungen haftet das Glas- oder Glaskeramikmaterial reib- bzw. kraftschlüssig an dem umgebenden Metall an. Der Kraftschluss geht verloren, sobald die durch die Haftreibung bewirkte Gegenkraft überschritten wird.

Unter Verschmelztemperatur bzw. Verschmelzungstemperatur des Glases oder der Glaskeramik wir diejenige Temperatur des Glases oder der Glaskeramik verstanden, bei der das Glasmaterial erweicht und so an dem mit dem Glasmaterial zu verschmelzenden Metall dicht anliegt, so dass eine Fügeverbindung zwischen dem Glas oder der Glaskeramik und dem Metall erhalten wird.

Die Verschmelztemperatur kann beispielsweise über die Halbkugeltemperatur wie in R. Görke, K.-J. Leers: Keram. Z. 48 (1996) 300-305 bzw. nach DIN 51730, ISO 540 oder CEN/TS 15404 und 15370-1 beschrieben, bestimmt werden. Die Messung der Halbkugeltemperatur ist ausführlich in der DE 10 2009 011 182 A1, erläutert. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann. Wird ein kristallisationsfreies Glas, beispielsweise in Form eines Glaspulvers, aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glas, dass die Betriebstemperatur, welcher die Fügeverbindung dauerhaft ausgesetzt sein kann, nicht höher als die Verschmelztemperatur sein darf. Glaszusammensetzungen, wie sie vorliegend eingesetzt werden, werden im Allgemeinen oftmals aus einem Glaspulver hergestellt, das aufgeschmolzen wird und unter Wärmeeinwirkung mit den zu verbindenden Bauteilen die Fügeverbindung ergibt. Die Verschmelztemperatur bzw. Schmelztemperatur entspricht in der Regel etwa der Höhe der sogenannten Halbkugeltemperatur des Glases. Gläser mit niedrigen Verschmelztemperaturen bzw. Schmelztemperatur werden auch als Glaslote bezeichnet. Anstelle von Verschmelz- oder Schmelztemperatur wird in einem solchen Fall von Lottemperatur bzw. Löttemperatur geredet. Die Verschmelztemperatur bzw. Lottemperatur kann um ± 20 K von der Halbkugeltemperatur abweichen.

Die aus der DE 10 2009 011 182 A1 bekannt gewordenen Glaslote betreffen Hochtemperaturanwendungen, z. B. bei Brennstoffzellen.

Das Einglasen des Leiters, insbesondere des stiftförmigen Leiters in die Öffnung, wird wie folgt durchgeführt:
Zunächst wird das Glas- bzw. das Glaskeramikmaterial zusammen mit dem stift förmigen Leiter in die Öffnung im Grundkörper eingebracht. Sodann wird das Glas zusammen mit dem stiftförmigen Leiter auf die Verschmelztemperatur des Glases erwärmt, so dass das Glas- bzw. Glaskeramikmaterial erweicht und in der Öffnung den stiftförmigen Leiter umschließt und am Grundkörper anliegt. Da die Schmelztemperatur sowohl des Materials des Grundkörpers als auch des stiftförmigen Leiters oberhalb der Verschmelztemperatur des Glas- bzw. Glaskeramikmaterials liegt, liegt der Grundkörper wie auch der Leiter, insbesondere der stiftförmige Leiter im festen Zustand vor. Bevorzugt liegt die Verschmelztemperatur des Glas- oder Glaskeramikmaterials 20 bis 150 K unterhalb der Schmelztemperatur des Materials des Grundkörpers bzw. stiftförmigen Leiters. Wird beispielsweise Aluminium als Leichtmetall mit einem Schmelzpunkt von T_{SCHMELZ} = 660,32° C verwendet, so liegt die Verschmelztemperatur, die über die Halbkugeltemperatur bestimmt werden kann, des Glas- oder Glaskeramikmaterials im Bereich 350° C bis 640° C, bevorzugt im Bereich 450° C bis 600° C. Alternativ zu einem Leichtmetall wie Aluminium, Magnesium, Aluminiumlegierungen oder Magnesiumlegierungen könnte als Material für den Grundkörper auch eine SiC Matrix eingesetzt werden, die mit Al infiltriert ist. Ein derartiges Material wird auch als AlSiC bezeichnet. AlSiC weist einen SiC-Kern auf, in den Al eindiffundiert ist. Durch den Anteil des Al können die Eigenschaften, insbesondere der Ausdehnungskoeffizient, eingestellt werden. Insbesondere hat AlSiC eine niedrigere Wärmeausdehnung als reines Aluminium.

Weitere Materialien für den Grundkörper sind Titan, Titanlegierungen, insbesondere Ti6246 oder Ti6242. Titan ist ein körperverträgliches Material, so dass es für medizinische Anwendungen, beispielsweise in der Prothetik, zum Einsatz kommt. Ebenso wird es wegen der besonderen Festigkeit, Beständigkeit und geringem Gewicht in besonderen Anwendungen gerne verwendet, beispielsweise im Rennsport, aber auch für Luft- und Raumfahrtanwendungen.

Weitere Materialien für den Grundkörper sind auch Metalle, insbesondere Stahl, nicht rostender Stahl, Edelstahl oder Werkzeugstahl, der für eine spätere Wärmebehandlung vorgesehen ist. Verwendbar als

Edelstähle sind beispielsweise X12CrMoS17, X5CrNi1810, XCrNiS189, X2CrNi1911, X12CrNi177, X5CrNiMo17-12-2, X6CrNiMoTi17-12-2, X6CrNiTi1810 und X15CrNiSi25-20, X10CrNi1808, X2CrNiMo17-12-2, X6CrNiMoTi17-12-2. Um eine besonders gute Verschweißbarkeit sowohl beim Laserschweißen wie auch beim Widerstandsschweißen zur Verfügung stellen zu können, als Material für den Grundkörper und/oder das Gehäuseteil, insbesondere das Batteriezellengehäuse, ganz besonders Edelstähle, insbesondere Cr-Ni-Stähle mit den Werkstoff-Nummern (WNr.) gemäß Euro-Norm (EN) 1.4301, 1.4302, 1.4303, 1.4304, 1.4305, 1.4306, 1.4307 verwandt. Als Normalstahl kann St35, St37 oder St38 verwandt werden.

In vorliegender Anmeldung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Werden die Leichtmetalle zudem als Materialien für die Leiter, beispielsweise dem stiftförmigen Leiter oder das Elektrodenverbindungsbauteil verwandt, so zeichnen sich die Leichtmetalle des Weiteren noch durch eine spezifische elektrische Leitfähigkeit im Bereich 5 · 10⁶ S/m bis 50 · 10⁶ S/m aus.

Bei Einsatz in Druckglasdurchführungen liegt zudem noch der Ausdehnungskoeffizient α für den Bereich 20° C bis 300° C im Bereich 18 · 10⁻⁶/K bis 30 · 10⁻⁶/K.

Unter der zuvor gegebenen Definition eines Leichtmetalls sind insbesondere Aluminium und Aluminiumlegierungen zu verstehen mit einem Schmelzpunkt bzw. einer Schmelztemperatur im Bereich 350° C bis 700° C, einer elektrischen Leitfähigkeit im Bereich 10·10⁶ S/m bis 40·10⁶S/m, einem Ausdehnungskoeffizient im Bereich 18 · 10⁻⁶/K bis 26 10⁻⁶/K sowie einem spezifischen Gewicht im Bereich 2,5kg/dm³ bis 2,9 kg/dm³ und Magnesium und Magnesiumlegierungen mit einem Schmelzpunkt bzw. einer Schmelztemperatur im Bereich 350° C bis 800° C, mit einer elektrischen Leitfähigkeit im Bereich 5·10⁶S/m bis 50·10⁶S/m, einem Ausdehnungskoeffizienten im Bereich 20 · 10⁻⁶ bis 30 10⁻⁶ K⁻¹ sowie einem spezifischen Gewicht im Bereich 1,0 kg/dm³ bis 3,0 kg/dm³ zu subsumieren.

Die erfindungsgemäße Durchführung zeichnet sich somit dadurch aus, dass eine Einglasung, insbesondere eine Druckeinglasung, in einen niedrig schmelzenden Grundkörper bzw. einen Grundkörper aus einem Material mit niedrigem Schmelzpunkt möglich ist.

Das Material des Leiters, insbesondere des stiftförmigen Leiters kann identisch zum Material des Grundkörpers sein, also beispielsweise Aluminium, eine Aluminiumlegierung, AlSiC, Magnesium oder eine Magnesiumlegierung. Dies hat den Vorteil, dass der Ausdehnungskoeffizient von Grundkörper und Metallstift identisch ist. Der Ausdehnungskoeffizient α des Glas- oder Glaskeramikmaterials muss dann nur an ein Material angepasst werden. Wenn eine Druckglasdurchführung zur Verfügung gestellt werden soll ist α_{Glas} unterschiedlich zu α_{Grunkörper} und/oder α_{Metallstift}. Falls α_{Glas} ungefähr α_{Grundkörper} oder α_{Metallstift} ist, handelt es sich um eine angepasste Durchführung. Bei angepassten Durchführungen treten aufgrund des im Wesentlichen gleichen Ausdehnungskoeffizienten der Materialien bei Temperaturänderungen keine Spannungen zwischen dem Isolator, insbesondere dem Glasmaterial und dem Grundkörper bzw. Metallstift auf. Ein derartiges Verhalten kann vorteilhaft sein.

Alternativ hierzu kann der stiftförmige Leiter Cu umfassen oder CuSiC oder eine Kupferlegierung.

Andere Materialien für den Leiter, insbesondere den stiftförmigen Leiter sind Aluminiumlegierungen, Magnesium oder Magnesiumlegierungen, Gold oder Goldlegierungen, Silber oder Silberlegierungen, NiFe, ein NiFe-Mantel mit Kupferinnenteil sowie eine Kobald-Eisen-Legierung.

Als Aluminium bzw. Aluminiumlegierung für den Leiter finden bevorzugt Verwendung:
EN AW-1050 A
EN AW-1350
EN AW-2014
EN AW-3003
EN AW-4032
EN AW-5019
EN AW-5056
EN AW-5083
EN AW-5556A
EN AW-6060
EN AW-6061.

Als Kupfer bzw. Kupferlegierungen für den Leiter finden bevorzugt Verwendung:
Cu-PHC 2.0070
Cu-OF 2.0070
Cu-ETP 2.0065
Cu-HCP 2.0070
Cu-DHP 2.0090

Im Fall, dass der Grundkörper und der Metallstift unterschiedliche Materialien aufweist, gilt beispielsweise α_{Grundkörper} ≥ α_{Glas} ≥ α_{Metallstift}. Alternativ zu einem einzigen Glasmaterial mit einem Ausdehnungskoeffizienten kann in einer weitergebildeten Ausführungsform vorgesehen sein, dass das Glas- oder Glaskeramikmaterial ein erstes Glas- oder Glaskeramikmaterial mit einem ersten Ausdehungskoeffizienten α₁ und ein zweites Glas- oder Glaskeramikmaterial mit einem zweiten Ausdehnungskoeffizienten α₂ umfasst, wobei der Ausdehnungskoeffizient α₁ des ersten Glas- oder Glaskeramikmaterials an den Ausdehnungskoeffizienten des Materials des Grundkörpers angepasst ist und der Ausdehungskoeffizient α₂ an den Ausdehnungskoeffizienten des Materials des stiftförmigen Leiters. Die Glasteile, bestehend aus mehreren unterschiedlichen Gläsern, können beispielsweise als Glasformteile, bestehend aus mehreren Glasmaterialien, hergestellt werden. Besonders bevorzugt ist es, wenn das erste Metall ein Leichtmetall, beispielsweise Aluminium ist und das erste Glasmaterial derart gewählt ist, dass der Ausdehnungskoeffizient α an den Ausdehnungskoeffizienten von Aluminium (ungefähr α = 23 x 10⁻⁶ K⁻¹ bei 20°C) angepasst ist. Bevorzugt liegen die Werte für den Ausdehnungskoeffizienten α₁ daher im Bereich (16 bis 25) x 10⁻⁶ K⁻¹ im Temperaturbereich 20°C bis 300° C.

Als Glasmaterial mit einem derartigen Ausdehnungskoeffizienten α₁ sind insbesondere Silikattitanate, Sulphophosphate, Telluride, Borate, Vanadate, Fluoride, Phosphate und Silikate als Glasfamilien geeignet.

Diese Glasmaterialien können zur Dehnungsanpassung, d.h. zur Anpassung des Ausdehnungskoeffizienten, noch mit Füllstoffen versehen sein. Auch die Zugabe von Alkalien bzw. Erdalkalien zu den Gläsern zur Einstellung des Ausdehnungskoeffizienten sind denkbar

Wenn, wie zuvor beschrieben, in einer weitergebildeten Ausführungsform der Erfindung der stiftförmige Leiter Kupfer oder eine Kupferlegierung mit einem Ausdehnungskoeffizienten von ungefähr α = 16 x 10⁻⁶ K⁻¹ bei 20° C ist, so ist bevorzugt das zweite Glasmaterial so gewählt, dass der Ausdehnungskoeffizient α₂ im Bereich des Ausdehnungskoeffizienten des Metallstiftes liegt, d.h. zwischen 12 und 18 x 10⁻⁶ K⁻¹ bei 20° C.

Glas- oder Glaskeramikmaterialien, die einen derartigen Ausdehnungskoeffizienten zur Verfügung stehen, sind beispielsweise die Glasfamilien der Silikattitanate, Sulphophosphate, Telluride, Borate, Vanadate, Fluoride, Phosphate und Silikate.

Zur Dehnungsanpassung können auch bei diesen Gläsern Zusätze vorgesehen sein sowie Alkalien bzw. Erdalkalien.

Besonders bevorzugt als Glasmaterialien sind stabile Phosphatgläser, die einen deutlich niedrigeren Gesamtalkaligehalt als bekannte Alkali-Phosphat-Glaser aufweisen.

Durch die in der Regel hohe Kristallisationsstabilität der Phosphatgläser wird sichergestellt, dass das Aufschmelzen der Gläser auch bei Temperaturen < 600° C nicht behindert wird. Dies ermöglicht es, dass die nachfolgend angegebenen Glaszusammensetzungen als Glaslot verwendet werden können, da das Aufschmelzen der Glaszusammensetzungen in der Regel auch bei Temperaturen < 600° C nicht behindert wird.

Besonders bevorzugt umfasst das Glasmaterial durch das der Leiter, insbesondere der stiftförmige Leiter hindurchgeführt wird, wenigstens die nachfolgenden Komponenten in mol-%:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-19 mol-%, wobei M=K, Cs, Rb |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insesondere 0-20 mol-%, ganz bevorzugt 5-20 mol-% |
| Bi₂O₃ | 0-10 mol-%, insbesondere 1-5 mol-%, ganz bevorzugt 2-5 mol-% |

Ganz besonders bevorzugt ist eine Zusammensetzung, die nachfolgende Komponenten umfasst:

| | |
|---|---|
| P₂O₅ | 38-50 mol-%, insbesondere 39-48 mol-% |
| Al₂O₃ | 3-14 mol-%, insbesondere 4-12 mol-% |
| B₂O₃ | 4-10 mol-%, insbesondere 5-8 mol-% |
| Na₂O | 10-30 mol-%, insbesondere 14-20 mol-% |
| K₂O | 10-20 mol-%, insbesondere 12-19 mol-%, |
| PbO | 0-10 mol-%., insbesondere 0-9 mol-% |

Überraschenderweise hat sich gezeigt, dass die erfindungsgemäße Glaszusammensetzung mit einem Li-Anteil von bis zu 45 mol-%, insbesondere bis zu 35 mol-%, kristallisationsstabil sind, d. h. in einem nachgeschalteten Sinterschritt keine störende bzw. keine wesentliche Kristallisation zeigen.

Die zuvor genannten Glaszusammensetzungen weisen Li auf, das in die Glasstruktur eingebaut ist. Hierdurch eignen sich die Glaszusammensetzungen, insbesondere für Li-Ionen-Speichereinrichtungen, die Elektrolyten basierend auf Li, beispielsweise einer 1 M LiPF₆-Lösung umfassend eine 1:1 Mischung aus Ethylencarbonat und Dimethylcarbonat umfassen.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme mit bevorzugt weniger 20 mol-% Na₂O bzw. natriumfreie Gläser besonders beständig gegenüber Elektrolyten, insbesondere solchen, wie sie in Li-Ionen-Speichereinrichtungen verwandt werden, sind.

Die Beständigkeit der Glaszusammensetzung gegenüber den Batterie-Elektrolyten kann dadurch geprüft werden, dass die Glaszusammensetzung in Form eines Glaspulvers mit einer Körnung d50 = 10 µm gemahlen wird und in den Elektrolyten für eine vorbestimmte Zeit, beispielsweise eine Woche, ausgelaugt wird. D50 bedeutet, dass 50 % aller Partikel oder Körner des Glaspulvers kleiner oder gleich einem Durchmesser von 10 µm ist. Als nicht wässriger Elektrolyt wird beispielsweise eine Carbonatmischung aus Ethylencarbonat und Dimethylcarbonat im Verhältnis 1:1 1 M LiPF₆ als Leitsalz verwandt. Nachdem das Glaspulver dem Elektrolyten ausgesetzt war, kann das Glaspulver abfiltriert und der Elektrolyt auf Glasbestandteile, die aus dem Glas ausgelaugt wurden, untersucht werden. Hierbei hat sich herausgestellt, dass bei den Phosphatgläsern in den zuvor beschriebenen Zusammensetzungsbereichen überraschenderweise eine derartige Auslaugung in nur geringem Maß von weniger als 20 Massenprozent vorliegt, in besonderen Fällen auch eine Auslaugung < 5 Massenprozent erreicht wird. Des Weiteren zeigen derartige Glaszusammensetzungen eine thermische Ausdehnung α(20° C - 300°C) > 14 ·10⁻⁶/K, insbesondere zwischen 15 ·10⁻⁶/K und 25 ··10⁻⁶/K. Ein weiterer Vorteil der zuvor angegebenen Glaszusammensetzung ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für Al-Verschmelzungen entgegen den bisherigen Verfahren nicht notwendig. Vielmehr kann eine derartige Verschmelzung auch unter Luft erfolgen. Für beide Arten der Verschmelzungen kann als Schutzgas N₂ oder Ar benutzt werden. Als Vorbehandlung zum Verschmelzen wird das Metall, insbesondere das Leichtmetall gereinigt und/oder geätzt, wenn nötig gezielt oxidiert oder beschichtet. Während des Prozesses werden Temperaturen zwischen 300° C und 600 °C mit Heizraten von 0.1 bis 30 K/min und mit Haltezeiten von 1 bis 60 min verwandt.

Um das Glas einer IR-Erwärmung zugänglich zu machen, ist es vorteilhaft, wenn die vorgenannten Gläser mit Dotierstoffen versehen sind, die ein Emissionsmaximum im Bereich von Infrarot-Strahlung, insbesondere IR-Strahlung einer IR-Quelle aufweisen. Beispielhafte Materialien hierfür sind Fe, Cr, Mn, Co, V, Pigmente. Durch die Infrarot-Strahlung kann das so aufbereitete Glas- oder Glaskeramikmaterial örtlich gezielt erwärmt werden. Der Vorteil der IR-Erwärmung ist darin zu sehen, dass es möglich ist Gläser beziehungsweise Glaskeramiken einzusetzen, die eine Verschmelztemperatur haben, die oberhalb der Schmelztemperatur des Materials des Grundkörpers, insbesondere des scheibenförmigen Metallteiles und/oder des stiftförmigen Leiters, der durch die Öffnung im Grundkörper hindurchgeführt wird, liegt.

Um eine chemische Beständigkeit gegenüber beispielsweise Elektrolyt-Lösungen der Batterien zur Verfügung zu stellen, ist erfindungsgemäß vorgesehen, dass das Glas- oder Glaskeramikmaterial, durch den der stiftförmige Leiter hindurchgeführt wird, mit einem dritten Glasmaterial, welches eine besonders gute HF-Beständigkeit aufweist, abgedeckt wird. Ein derartiges Glasmaterial ist beispielsweise ein Phosphatglas. Anstelle von Glas kann als coating, d.h. als Abdeckmaterial, auch ein Kunststoff verwandt werden, der HF-beständig ist. Die Resistenz des Abdeckglases soll im Wesentlichen gegen Säuren wie beispielsweise HF vorliegen. Auch eine Beständigkeit gegen H₂O ist vorteilhaft.

Der Ausdehnungskoeffizient der Deckgläser ist an den Ausdehnungskoeffizienten des Glas- oder Glaskeramikmaterials des Glaspfropfens, bestehend aus einem ersten und/oder zweiten Glasmaterial, weitgehend abgestimmt.

Bevorzugt kann der Glaspfropfen, durch den der stiftförmige Leiter hindurchgeführt wird, bestehend aus wenigstens zwei Glasmaterialien mit unterschiedlichem Ausdehnungskoeffizienten α₁, α₂ als Glasformteil,hergestellt werden.

In einer besonders bevorzugten Ausführungsform der Erfindung ist die Durchführung derart aufgebaut, dass lediglich ein einziges Glasmaterial verwendet wird, das in der Regel an das Material des stiftförmigen Leiters, der beispielsweise Kupfer mit einem Ausdehnungskoeffizienten von α ≈ 16 x 10⁻⁶ K⁻¹ oder Aluminium mit einem Ausdehnungskoeffizienten von ungefähr α ≈ 23 x 10⁻⁶ K⁻¹ bei 20° C umfassen kann, angepasst ist.

Alternativ zu einem Glasmaterial, das mit Hilfe von Infrarot-Strahlung erwärmt werden kann, kann in einer weitergebildeten Ausführungsform das Glasmaterial auch mit Hilfe von Ultraschallschweißen auf das Metallteil aufgebracht werden. Bevorzugt weist das Glas- oder Glaskeramikmaterial denselben Ausdehnungskoeffizienten α bei Erwärmung mit IR-Strahlung oder Ultraschall-Schweißen auf wie der stiftförmige Leiter, insbesondere der Metallstift. Bei der Verbindung von einem Metallteil als Grundkörper mit einem Metallstift mittels Ultraschweißen und einem Glasmaterial sind verschiedene Ausführungsformen denkbar. In einer ersten Ausführungsform wird das Glasmaterial auf das Metallteil aufgebracht und mittels Ultraschall mit dem Metallteil verbunden. Der Metallstift wird mit einer Verdickung auf dem Metallteil verschweißt.

Um eine höhere mechanische Beständigkeit des Metallstifts zu erreichen und einen höheren Druck auf den Metallstift ausüben zu können, kann vorgesehen sein, die Durchgangsöffnung konisch auszubilden. Des Weiteren kann der Metallstift eine polygone Außenform aufweisen, wodurch ein Drehmoment auf den Metallstift ausgeübt wird, d.h. der Metallstift bzw. der stiftförmige Leiter gegen Verdrehen in der Öffnung gesichert wird.

Eine weitere Möglichkeit, eine Einglasung in einen Grundkörper mit niedrigem Schmelzpunkt zu erreichen, ist zunächst das Glas- oder Glaskeramikmaterial mit dem Material des Metallstifts zu verschmelzen. Anschließend wird der Grundkörper aus dem niedrig schmelzenden Material beispielsweise aus Aluminium durch Druckgießen hergestellt. Hierzu wird der Metallstift mit dem Glas- oder Glaskeramikmaterial mit dem niedrig schmelzenden Material, insbesondere dem Leichtmetall, beispielsweise dem Aluminium, umspritzt, ergebend den Grundkörper aus niedrig schmelzenden Material, insbesondere Aluminium, wobei das niedrig schmelzende Material auf das Glas- oder Glaskeramikmaterial aufschrumpft. Durch Abkühlen nach dem Umspritzen, das bevorzugt durch Druckgießen in einer Druckgussmaschine vorgenommen wird, wird eine Vorspannung des durch Druckgießen hergestellten Grundkörpers auf das Glas- oder Glaskeramikmaterial mit dem stiftförmigen Leiter aufgebracht.

In einer weiteren fortgebildeten Ausführungsform ist eine Stützeinrichtung im Bereich der Öffnung vorgesehen, um die Ausdehnung an das Glas bzw. die jeweilige Glassorte besser anpassen zu können. Mit der Stützeinrichtung gelingt es, die Ausdehnung des Grundkörpers an das Glas und die jeweilige Glassorte anzupassen und eine Kompression auf das Glas aufzubringen. Hierdurch ist es möglich andere Gläser beziehungsweise Glassorten einzusetzen als wenn das Glas- beziehungsweise die Glassorte an das Material lediglich des Grundkörpers angepasst ist.

Dadurch wird es möglich, eine hermetisch dichte Durchführung mit nur einer Glassorte zur Verfügung zu stellen. Die Stützeinrichtung kann in Form eines Stützringes ausgebildet sein oder alternativ das Metallteil als Verbundmaterial.

Mit der Erfindung wird eine Durchführung, insbesondere eine Durchführung für eine elektrische Speichereinrichtung, bevorzugt eine Batterie zur Verfügung gestellt, die sich gegenüber den Durchführungen im Stand der Technik, insbesondere denjenigen mit Kunststoff als Dichtmaterial durch eine hohe Temperaturbeständigkeit, insbesondere Temperaturwechselbeständigkeit auszeichnet. Insbesondere wird eine hermetische Dichtheit auch bei Temperaturänderung beziehungsweise bei Wechseln der Temperatur zur Verfügung gestellt, die verhindert, dass Flüssigkeit insbesondere Batterieflüssigkeit austreten kann und/oder Feuchtigkeit in das Gehäuse eindringt. Unter hermetischer Dichtheit wird verstanden, dass bei einem Druckunterschied von 1 bar die Helium-Leckrate <1.10⁻⁸ mbar Is⁻¹, bevorzugt <1·10⁻⁹ mbar Is⁻¹ liegt. Dadurch dass mit der Erfindung eine hermetisch dichte Durchführung zur Verfügung gestellt wird, wird die Lebensdauer einer elektrischen Speichereinrichtung, insbesondere einer Batteriezelle erheblich erweitert. Insbesondere wird die hermetische Dichtheit auch gewährleistet, wenn der durch das Glas- oder Glaskeramikmaterial hindurchgeführte stiftförmige Leiter sich aufgrund hoher Ströme und/oder bei Kurzschluss sich kurzzeitig stark erwärmt.

Neben der Durchführung stellt die Erfindung auch ein Gehäuse für eine elektrische Speichereinrichtung, insbesondere eine Batterie, bevorzugt eine Batteriezelle zur Verfügung, die eine erfindungsgemäße Durchführung aufweist. Das Gehäuse besteht bevorzugt aus dem gleichen Material wie der Grundkörper, insbesondere einem Leichtmetall. Der Grundkörper ist bei Batteriezellen bevorzugt Teil des Batteriegehäuses. Bevorzugt handelt es sich bei der Batterie um eine Lithium-Ionen-Batterie.

Die Erfindung soll nachfolgend anhand der Ausführungsbeispiele ohne Beschränkung hierauf beschrieben werden.

Es zeigen:
- Fig. 1: eine erfindungsgemäße Durchführung mit einem Multikomponentenglas;
- Fig. 2: ein Multikomponentenglas als Pressling;
- Fig. 3: eine Durchführung mit einem Stützring;
- Fig. 4: eine Durchführung mit einem Verbundmaterial für das Metallteil als Stützring;
- Fig. 5: eine Durchführung gemäß der Erfindung mit einer Ultraschall verschweißten Verbindung des Glasmaterials in der Durchführungsöffnung;
- Fig. 6: eine Durchführung gemäß der Erfindung mit einem Ultraschall verschweißten Glasmaterial auf einem Metallstück;
- Fig. 7: eine Durchführung gemäß der Erfindung mit einem Material, das IR-Strahlung absorbiert.

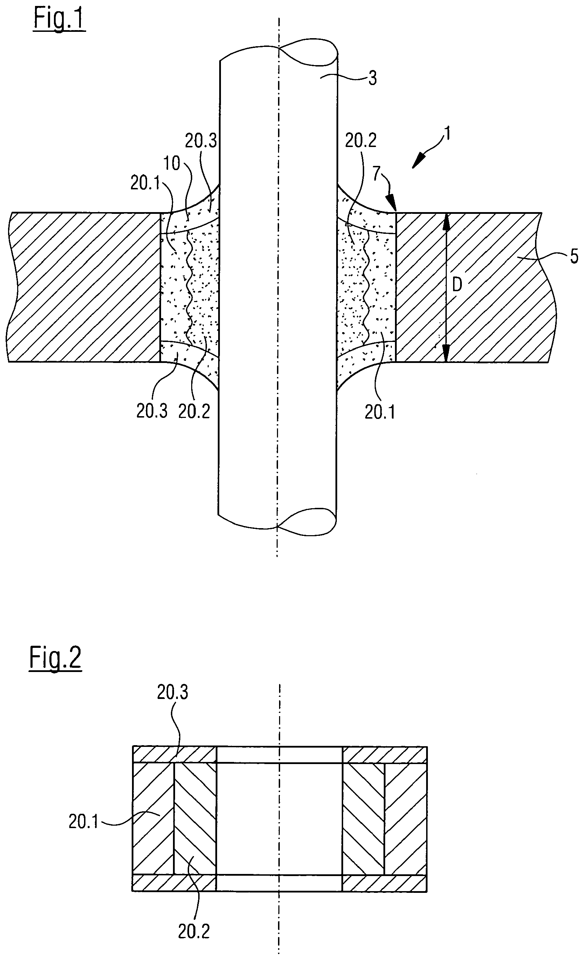

In Fig. 1 ist eine Durchführung 1 gemäß der Erfindung gezeigt. Die Durchführung 1 umfasst als stiftförmigen Leiter einen Metallstift 3, der bevorzugt aus einem Material enthaltend Kupfer besteht sowie als Grundkörper 5 einem Metallteil, das erfindungsgemäß aus einem niedrig schmelzenden Metall, d.h. einem Leichtmetall, insbesondere Aluminium, einer Aluminiumlegierung, Titan, einer Titanlegierung, Magnesium oder einer Magnesiumlegierung besteht. Leichtmetalle wie sie vorliegend verwandt werden, weisen eine Dichte < 5kg/dm³, insbesondere im Bereich 1,0 kg/dm³ bis 3,0 kg/dm³ auf T., Werden die Leichtmetalle als Material für den Leiter verwandt, liegt die elektrische Leitfähigkeit im Bereich 5 ·10⁶ S/m bis 50·10⁶ S/m. Der Ausdehnungskoeffizient α (20° C - 300° C)des Leichtmetalls liegt im Bereich 18 10⁻⁶ bis 30 · 10⁻⁶ /K.

Der Metallstift 3 wird durch eine Öffnung 7, die durch das Metallteil 5 hindurchgeht, hindurchgeführt. Obwohl nur das Hindurchführen eines einzelnen Metallstiftes durch die Öffnung gezeigt ist, könnten auch mehrere Metallstifte durch die Öffnung hindurchgeführt werden, ohne dass von der Erfindung abgewichen wird.

Die Außenkontur der Öffnung 7 kann bevorzugt rund oder aber auch oval ausgebildet sein. Die Öffnung 7 geht durch die ganze Dicke D des Grundkörpers bzw. Metallteils 5 hindurch. Der Metallstift 3 ist in ein Glas- oder Glaskeramikmaterial 10 eingeglast und wird im Glas- oder Glaskeramikmaterial 10 durch die Öffnung 7 durch den Grundkörper 5 hindurchgeführt. In den Grundkörper 5 wird die Öffnung 7 durch beispielsweise einen Trennvorgang, bevorzugt Stanzen, eingebracht. Um eine hermetische Durchführung des Metallstiftes 3 durch die Öffnung 7 bereitzustellen, wird der Metallstift 3 in einem Glaspfropfen aus einem Glas- oder Glaskeramikmaterial eingeschmolzen. Ein wesentlicher Vorteil dieser Herstellungsweise besteht darin, dass auch unter erhöhten Belastungen auf den Glaspfropfen, z. B. bei einer Druckbelastung, ein Herausdrücken des Glaspfropfens mit Metallstift aus der Öffnung 7 vermieden wird. Bevorzugt ist vorgesehen, dass die Verschmelztemperaturtemperatur des Glas- oder Glaskeramikmaterials mit dem Grundkörper 20 K bis 100 K unterhalb der Schmelztemperatur des Materials des Grundkörpers 5 und/oder des stiftförmigen Leiters liegt.

In der dargestellten Ausführungsform besteht, ohne Beschränkung hierauf, der Glaspfropfen 10 nicht aus einem einzigen Material besteht, sondern aus mehreren Materialien, es sich also um ein Multikomponentenglas handelt. Da der Ausdehnungskoeffizient α_{Cu} des Metallstiftes, der bevorzugt aus Kupfer besteht, beispielsweise im Bereich 16 x 10⁻⁶ K⁻¹ bei 20°C liegt und der Ausdehnungskoeffizient α_{Al} des Grundkörpers bzw. Metallteiles, das bevorzugt aus Aluminium hergestellt ist, im Bereich 23 x 10⁻⁶ K⁻¹ liegt, weist der Glaspfropfen, an der zum Grundkörper bzw. zum Metallteil gerichteten Seite des Glasmaterials 10 ein erstes Glasmaterial 20.1 auf, dessen Ausdehnungskoeffizient α₁ᵢ im Bereich des Ausdehnungskoeffizienten des Metallteils 5 liegt. Im Fall, dass das Metallteil aus Aluminium gefertigt ist, liegt der Ausdehnungskoeffizient α₁ im Bereich 16 bis 25 x 10⁻⁶ K⁻¹.

Obwohl vorliegend der Glaspfropfen aus mehreren Materialien, nämlich einem ersten und einem zweiten Glasmaterial mit unterschiedlichen Ausdehnungskoeffizienten α₁, α₂ besteht, ist dies nicht zwingend. Möglich wäre auch ein einziges Material, wobei bevorzugt die Verschmelztemperatur unterhalb der Schmelztemperatur des umgebenden Leichtmetalls liegt.
Das zum Metallstift hin gerichtete zweite Glasmaterial 20.2 des Multikomponentenglases weist im Wesentlichen den Ausdehnungskoeffizienten α₂ des Metallstifts 3 auf. Ist der Metallstift 3 ein Kupferstift, so beträgt der Ausdehnungskoeffizient α₂ des zweiten Glasmaterials 20.2 zwischen 12 und 18 x 10⁻⁶ K⁻¹

Um die chemische Beständigkeit des Multikomponentenglases 10 gegenüber beispielsweise Flusssäure (HF) und/oder Wasser zu erhöhen, ist vorgesehen, dass auf die Glasschichten aus erstem und zweitem Glasmaterial 20.1, 20.2 ein Deckglas 20.3 oder eine Kunststoffschicht aufgebracht wird.

Bei den ersten Glasmaterialien für das Außenglas 20.1 kann es sich bevorzugt um Silikattitanate, Sulfophosphate, Telluride, Borate, Vanadate, Fluoride, Phosphate und Silikate handeln, wobei die Gläser Füllstoffe zur Dehnungsanpassung bzw. Alkalien oder Erdalkalien umfassen können. Für das Innenglas, d.h. das zum Metallstift 3 hin gerichtete zweite Glasmaterial, kommen ebenfalls Silikattitanate, Sulphophosphate, Telluride, Borate, Vanadate, Fluoride, Phosphate und Silikate in Betracht, wobei auch hier Füllstoffe zur Dehnungsanpassung vorgesehen sein könnten sowie Alkalien bzw. Erdalkalien. Die Deckgläser sind bevorzugt dritte Glasmaterialien oder Kunststoffe, die eine ausreichende chemische Beständigkeit aufweisen, z. B. gegen Flusssäure HF. Bei Lithium-Ionen-Batterien handelt es sich bei den Deckgläsern bevorzugt um Phosphatgläser. Die Gläser werden neben den Verschmelztemperaturen, die niedriger liegen müssen als die des niedrig schmelzenden Grundkörpers, insbesondere danach ausgewählt, dass sie die notwendige Beständigkeit gegen Säuren, insbesondere HF und/oder Wasser, aufweist.

In Fig. 2 ist nochmals ein Glaspfropfen, wie er in Fig. 1 verwendet werden kann, detailliert dargestellt. Der Glaspfropfen wird als Dreifachglas oder Multikomponentenglas-Pressling hergestellt und umfasst insgesamt drei Gläser, das erste Glasmaterial 20.1 z. B. mit einem Ausdehnungskoeffizienten α₁ im Bereich (16 bis 25) x 10⁻⁶ K⁻¹, das zweite Glasmaterial 20.2 mit z. B. einem Ausdehnungskoeffizienten α₂ im Bereich (12 bis 18) x 10⁻⁶ K⁻¹ sowie das dritte Glasmaterial 20.3 als Deckglas mit ausreichender Beständigkeit, z. B. in Bezug auf Flusssäure und/oder gegenüber Wasser.

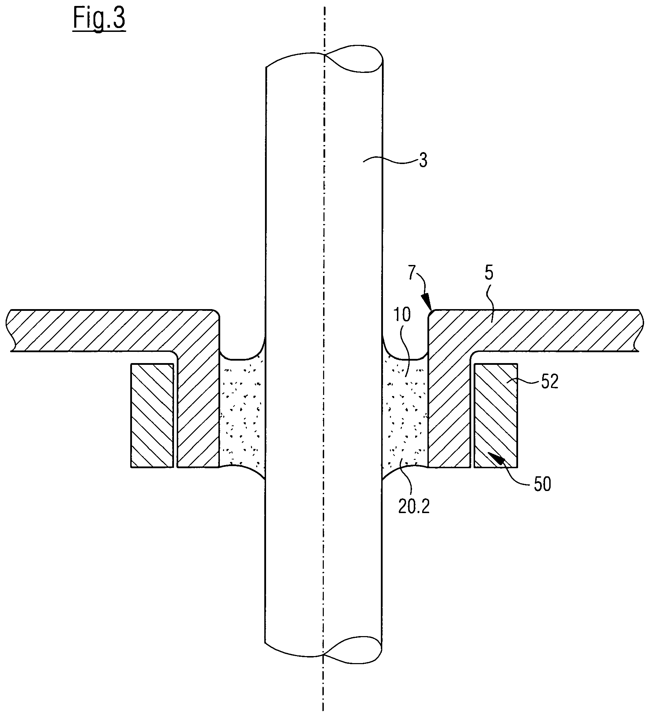

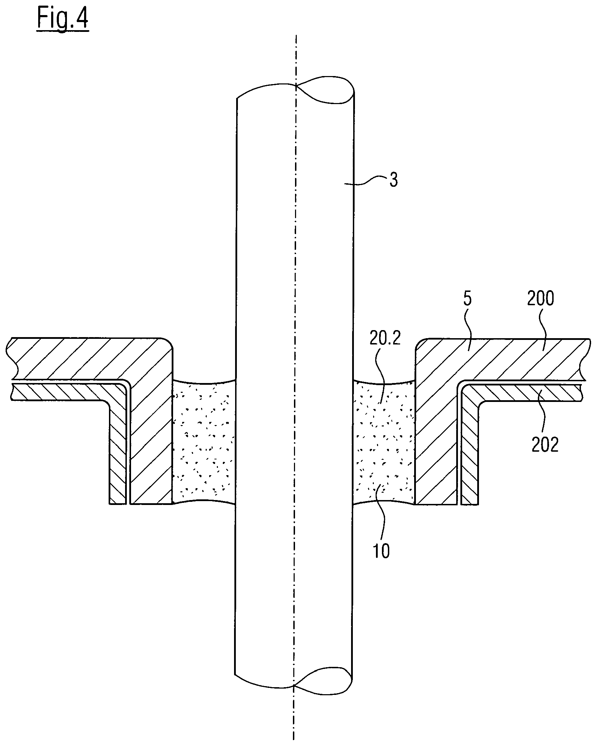

Alternativ zu einer Ausgestaltung mit einem Multikomponentenglas ist es auch möglich, wie in Fig. 3 und 4 dargestellt, mit einem einzigen Glas auszukommen.

Besteht der Glaspropfen aus einem einzigen Glasmaterial bzw. einer einzigen Glaszusammensetzung, handelt es sich insbesondere um ein in der Regel stabiles Phosphatglas, das einen deutlich niedrigeren Gesamtalkaligehalt als bekannte Alkali-Phosphat-Gläser aufweisen.

Durch die in der Regel hohe Kristallisationsstabilität der Phosphatgläser wird sichergestellt, dass das Aufschmelzen der Gläser auch bei Temperaturen < 600° C nicht behindert wird, Dies ermöglicht es, dass die angegebenen Glaszusammensetzungen als Glaslot verwendet werden können, da das Aufschmelzen der Glaszusammensetzungen in der Regel auch bei Temperaturen < 600° C möglich ist.

Die Verschmelztemperatur kann beispielsweise über die Halbkugeltemperatur wie in R. Görke, K.-J. Leers: Keram. Z. 48 (1996) 300-305, bzw. nach DIN 51730, ISO 540 oder CEN/TS 15404 und 15370-1 beschrieben, bestimmt werden. Die Messung der Halbkugeltemperatur ist ausführlich in der DE 10 2009 011 182 A1, beschrieben. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann.

Besonders bevorzugt umfasst das Glasmaterial durch das der stiftförmige Leiter hindurchgeführt wird, wenigstens die nachfolgenden Komponenten in mol.-% umfasst:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 5-8 mol-% |
| Na₂O | 0-30 mol-%, insbesondere 0-20 mol-% |
| M₂O | 0-20 mol-%, insbesondere 12-19 mol-%, wobei M=K, Cs, Rb |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 0-10 mol-%, insbesondere 1-5 mol-%, ganz bevorzugt 2-5 mol-% |

Nachfolgende Tabelle 1 können Ausführungsbeispiele derartiger Gläser entnommen werden:

**Tabelle 1:**

| Ausführungsbeispiele: | | | | | | | | |
|---|---|---|---|---|---|---|---|---|
| | AB1 | AB2 | AB3 | AB4 | AB5 | AB6 | AB7 | AB8 |
| Mol-% | | | | | | | | |
| P₂O₅ | 47.6 | 43.3 | 43.3 | 43.3 | 37.1 | 40.0 | 42,0 | 46,5 |
| Al₂O₃ | 4.2 | 8.6 | 8.7 | 2.0 | 2 | 12.0 | 12,0 | 4,2 |
| B₂O₃ | 7.6 | 4.8 | 4.7 | 4.8 | 4.9 | 6.0 | 6,0 | 7,6 |
| Na₂O | 28.3 | 17.3 | | | | 15.0 | 16.0 | 28,3 |
| K₂O | 12.4 | 17.3 | 17.3 | | | 18.0 | 19.0 | 12,4 |
| PbO | | | | | | 9.0 | | |
| BaO | | 8.7 | 8.7 | 15.4 | 14 | | | |
| Li₂O | | | 17,3 | 34,6 | 42,1 | | | |
| Bi₂O₃ | | | | | | | 5 | 1 |
| Halbkugel Temperatur(°C) | 513 | 554 | 564 | 540 | 625 | | 553 | 502 |
| α_20-300° C (10⁻⁶ /K | 19 | 16,5 | 14,9 | 13,7 | 14,8 | 16.7 | 16,0 | 19,8 |
| Tg (°C) | 325 | 375 | 354 | 369 | 359 | 392 | 425 | 347 |
| Dichte [g/cm³] | 2,56 | | | | | 3 | 3 | |
| Auslaugung In Ma-% | 18,7 | 14,11 | 7,66 | 12,63 | 1,47 | 3,7 | 29,01 | 8,43 |
| Gewichtsverlust(%) nach 70h in 70°C-Wasser | 10,7 | 0,37 | 0,1 | 0,13 | 0,13 | n.B. | 0,006/0,001 | 0.45/0,66 |

Ausführungsbeispiel 1 in Tabelle 1 ist insbesondere für Aluminium/Aluminium-Einglasungen geeignet, d.h. Einglasungen eines Aluminiumstiftes als Leiter in einen umgebenden Aluminium-Grundkörper.

Ausführungsbeispiel 6 in Tabelle 1 ist insbesondere für Cu/Al-Einglasungen geeignet, d.h. Einglasungen eines Kupferstiftes als Leiter in einen umgebenden Aluminium-Grundkörper.

Neben der Auslaugung als Maß für die Beständigkeit gegenüber nicht wässrigen Elektrolyten wurden auch die Wasserbeständigkeit der einzelnen Gläser bestimmt.

Die Wasserbeständigkeitstests sind so erfolgt, dass Niederschmelzungen von den Gläsern gemacht wurden (2x2 cm, Höhe: ∼0,5 cm), die in 200 ml Wasser bei 25°C und 70°C 70 Stunden eingelagert wurden. Danach wurde der Materialverlust in Gew.% bestimmt und in der Tabelle angegeben.

Obwohl einige der Ausführungsbeispiele einen für die Fügung mit Cu tendenziell zu niedrigen Ausdehnungskoeffizienten aufweisen, wird deutlich, dass hohe Li-

Anteile in der Schmelze gelöst werden können, ohne dass das Glas mit einer derartigen Glaszusammensetzung instabil wird.

Die Ausführungsbeispiele AB7 und AB8 zeichnen sich dadurch aus, dass sie Bi₂O₃ z. B. anstelle von PbO, wie in Ausführungsbeispiel 6, enthalten.

Überraschenderweise hat sich gezeigt, dass durch Bi₂O₃ die Wasserbeständigkeit deutlich erhöht werden kann. Durch die Einführung von 1 mol-% Bi₂O₃ wird beispielsweise eine 10-fach höhere Wasserbeständigkeit beim Ausführungsbeispiel AB1 erzielt. Bi₂O₃ kann insbesondere auch anstelle von PbO gemäß Ausführungsbeispiel 6 verwandt werden. Besonders bevorzugt sind Glaszusammensetzungen, die bis auf Verunreinigungen frei von PbO sind, d.h. die weniger als 100 ppm, bevorzugt weniger als 10 ppm, bevorzugt weniger als 1 ppm PbO umfassen.

In Tabelle 1 ist die Zusammensetzung in mol-% angegeben, die Transformationstemperatur Tg, wie Sie beispielsweise in "Schott Guide to Glass, second edition, 1996, Chapman&Hall, Seiten 18-21 definiert ist, die Gesamtauslaugung in Massenprozent (Ma -%), der Ausdehnungskoeffizient α in 10⁻⁶K⁻¹ im Temperaturbereich 20°C bis 300° C sowie die Dichte in g/cm³.

Die Gesamtauslaugung wird wie nachfolgend beschrieben bestimmt. Zunächst wird die Glaszusammensetzungen zu Glaspulver mit einer Körnung d50 = 10µm gemahlen, für eine Woche dem Elektrolyten bestehend aus Ethylencarbonat/Dimethylcarbonat im Verhältnis 1:1 mit darin gelöstem 1 molaren LiPF₆ als Leitsalz ausgesetzt und nach dieser Zeit der Elektrolyt bestehend aus Ethylcarbonat/Dimethylcarbonat im Verhältnis 1:1 mit darin gelösten 1 molaren LiPF₆ als Leitsalz auf Glasbestandteile, die aus dem Glas ausgelaugt wurden, untersucht. In vorausgegangener Tabelle 1 bezeichnet n. b. nicht bekannte Eigenschaften.

Bevorzugt sind Stützeinrichtungen für das Metallteil, beispielsweise zur Aufnahme der unterschiedlichen Dehnungen vorgesehen. In Fig. 3 sind gleiche Bauteile wie in den Figuren 1 und 2 mit denselben Bezugsziffern gekennzeichnet. Wiederum befindet sich der Metallstift 3 in einer Einglasung 10, die vorliegend aber aus einem einzigen Material 20.2 mit dem Glasmaterial, das in seinem Ausdehnungskoeffizienten α auf den Metallstift 3 abgestimmt ist, ausgeführt ist und eine Verschmelztemperatur hat, die 20 K bis 100 K unterhalb der Schmelztemperatur des Metalles liegt. Der Ausdehnungskoeffizient α₂ des Glasmaterials 20.2 beträgt bevorzugt zwischen (12 und 18) x 10⁻⁶ K⁻¹, falls der Metallstift aus Kupfer ist, da der Ausdehnungskoeffizient α_{Cu} von Kupfer ungefähr 16 x 10⁻⁶ K⁻¹ bei 20°C beträgt.

Der Grundkörper 5 bzw. das Metallteil weist wiederum eine Öffnung 7 auf. Der Grundkörper 5 ist bevorzugt ein Leichtmetall, insbesondere Aluminium und weist im Falle von Aluminium einen Ausdehnungskoeffizienten von α_{Al} ungefähr 23 x 10^{- 6} K⁻¹ bei 20°C auf.

Um die Vorspannung an das Glas und die jeweilige Glassorte anzupassen und eine Kompression auf das Glas 10 aufzubringen, ist eine Stützeinrichtung 50, hier ein Stützring 52, der aus nicht rostendem Stahl ausgebildet sein kann, vorgesehen. Der Grundkörper 5 wird hierzu umgeformt und kommt zwischen Stützring 52 und Glasmaterial 20.2 zu liegen.

Alternativ zu einer Ausgestaltung mit einem Stützring 52 als Stützeinrichtung gemäß Fig. 3 kann für das Metallteil 5 ein Verbundmaterial vorgesehen sein. Bei dem Verbundmaterial handelt es sich um ein Aluminium-Metall-Verbund. Auf das Aluminiumteil 200 wird ein Stahl 202 platiniert. Wie im Ausführungsbeispiel gemäß Fig. 3 ist das Glasmaterial 10 ein Einkomponentenglas 20.2 wie zuvor beschrieben mit entsprechendem Tg, das in seinem Ausdehnungskoeffizienten α an den Metallstift 3 angepasst ist. Handelt es sich bei dem Metallstift 3 um einen Kupfermaterial, so beträgt der Ausdehnungskoeffizient α des Glasmaterials 20.2 zwischen (12 bis 18) x 10⁻⁶ K⁻¹.

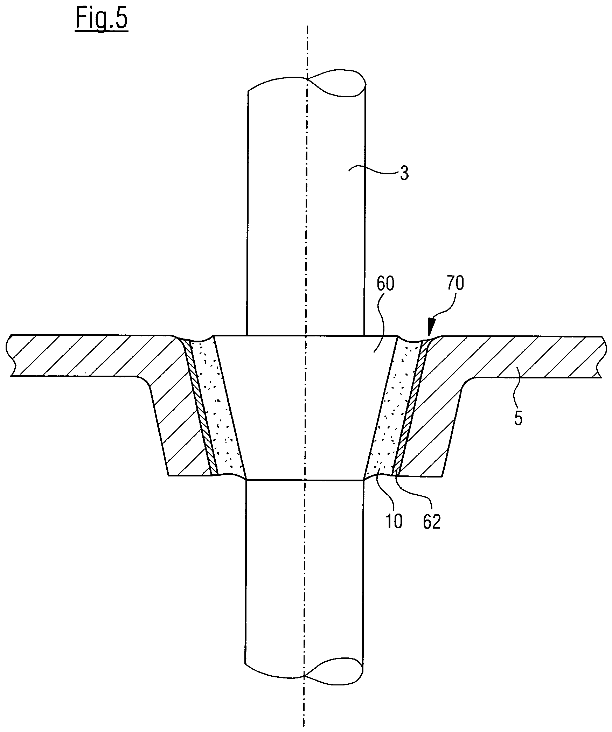

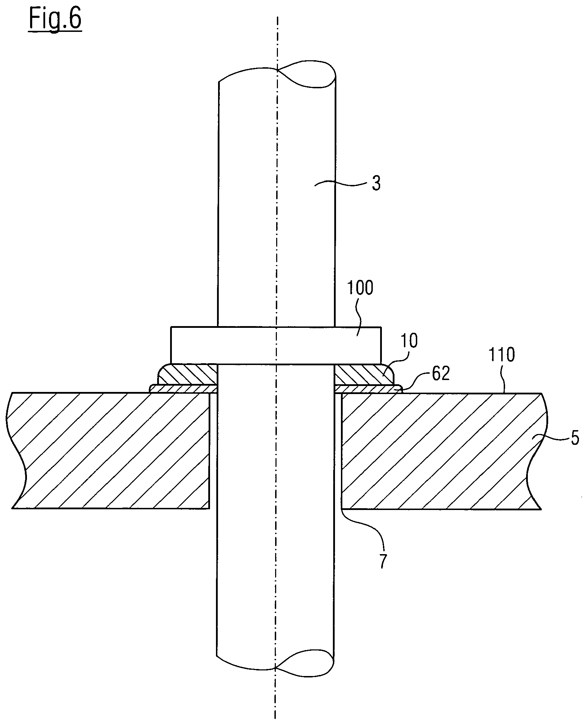

In Fig. 5 und 6 ist als weitere Ausführungsform der Erfindung eine Durchführung gezeigt, die durch die Verbindung des Glasmaterials durch Ultraschallschweißen mit dem Metallteil 5 hergestellt wird. Das Ultraschallverschweißen des Glaspfropfens 10 in der konisch zulaufenden Durchgangsöffnung 70 hat den Vorteil, dass aufgrund der konisch zulaufenden Öffnung 70 ein Druck auf den Metallstift 3 aufgebaut werden kann und eine höhere mechanische Beständigkeit des Metallstifts 3 erzielt wird. Des Weiteren kann ein Drehmoment auf dem Metallstift durch eine polygone Form im Bereich 60 des Metallstiftes aufgebracht werden. Die Ultraschallschweißverbindung zwischen dem Glaspfropfen 10 und dem Metallteil 5 ist mit 62 bezeichnet. Der Ausdehnungskoeffizient des Glasmaterials 10 ist an den des Metallstifts angepasst und beträgt im Falle, der Metallstift 3 aus Kupfer gefertigt ist, zwischen α₂ ≈ (12 bis 18) x 10⁻⁶ K⁻¹.

In Fig. 6 ist eine alternative Ausgestaltung einer mittels Ultraschallschweißen hergestellten Durchführung dargestellt. Bei der in Fig. 6 dargestellten Durchführung hat der Metallstift 3 einen Kranz 100. Der Metallstift 3 wird durch die Öffnung 7 des Metallteils 5 hindurchgeführt. Der Kranz 100 ist im Durchmesser größer als der Durchmesser der Öffnung 7. Daher kann der Kranz 100, der fest mit dem Metallstift 3 verbunden ist mittels Ultraschallschweißen auf der Oberseite 110 des Metallteils 5 befestigt werden. Die Ultraschweißverbindung, d.h. die Verbindungszone Grundkörper bzw. Metallteil 5/Glas 10, ist wiederum mit Bezugsziffer 62 gekennzeichnet. Zwischen Kranz und der Verbindungszone ist ein Glasmaterial 10 eingebracht. Das Glasmaterial 10 weist einen Ausdehnungskoeffizienten α₂ auf der weitgehend dem des Materials des Metallstifts entspricht, d.h. zwischen α₂ ≈ (12 bis 18) x 10⁻⁶ K⁻¹ liegt.

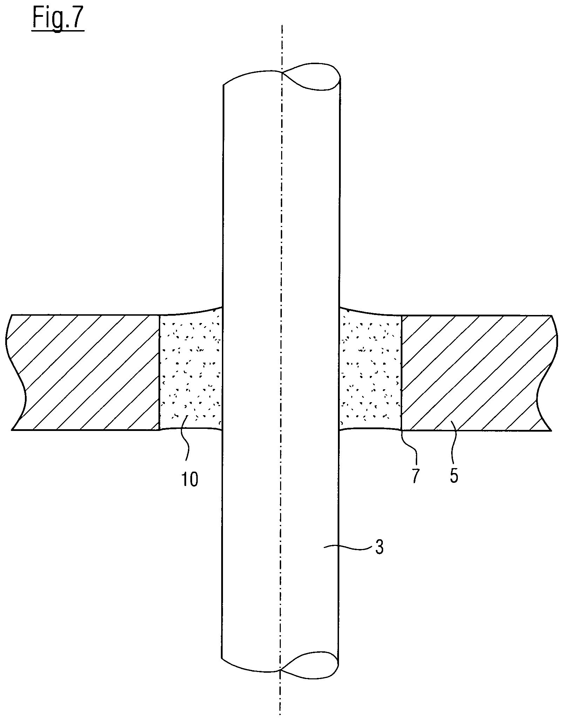

In Fig. 7 ist eine weitere Ausführungsform der Erfindung dargestellt.

Bei Fig. 7 ist wiederum der Metallstift mit 3 bezeichnet, der Grundkörper mit 5 und die Öffnung mit 7.

In der Öffnung ist wiederum ein Glasmaterial 10 zwischen Metallstift 3 und Grundkörper 5, insbesondere Metallteil eingebracht. Bei dem Glasmaterial 10 handelt es sich um ein Glasmaterial, das im Wesentlichen an den einen Ausdehnungskoeffizienten α des Metallstiftes 3 angepasst ist. Handelt es sich bei dem Metallstift um einen Kupferstift, so beträgt der Ausdehnungskoeffizient des Metallstifts ungefähr 16 x 10⁻⁶ K⁻¹. Demgemäß weist das Glasmaterial 10 einen Ausdehnungskoeffizienten α₂ zwischen (12 und 18) x 10⁻⁶ K⁻¹ auf.

Bei der Ausführungsform gemäß Fig. 7 ist das Glasmaterial 10 mit Dotierstoffen versetzt, die ein Emissionsmaximum im Bereich von Infrarot-Strahlung, aufweist. Insbesondere handelt es sich bei diesen Dotierstoffen und Eisen, Chrom, Kobalt, Vanadium.

Aufgrund der Dotierstoffe wird das Glas beispielsweise von einem Infrarot-Strahler abgestrahlter IR-Strahlung sehr stark erwärmt. Da die Erhitzung bzw. Erwärmung lediglich auf der Absorption von IR-Strahlung im Glas beruht, ist dies eine Möglichkeit, die Temperatur des Glases über die Schmelztemperatur des Metallteils oder des Metallstiftes anzuheben. Insbesondere bei der Verarbeitung von Leichtmetallen als Grundkörper ist dies vorteilhaft

Mit der Erfindung wird erstmals eine Durchführung angegeben, bei der durch ein Leichtmetall ein Metallstift hindurchgeführt und dicht verschlossen wird. Dies wird zum einen erreicht durch Gläser mit einer Verschmelztemperatur, die geringer ist als der Schmelzpunkt des Leichtmetalls, wobei die Gläser bevorzugt jeweils auf den Ausdehnungskoeffizienten des Metallstiftes angepasst ist. Alternative Verfahren zum Einglasen sind Ultraschallschweißen oder Infraroterwärmung, wobei Glasmaterialien mit Infrarotstrahlung absorbierenden Stoffen dotiert sind.

Mit der Durchführung gemäß der Erfindung kann ein Batteriegehäuse zur Verfügung gestellt werden, das hermetisch dicht ist auch bei einer Verformung des Batteriegehäuses im Gegensatz zu Kunststoffdurchführungen, die zur Rissbildung neigen. Hierdurch wird bei Batterien mit Batteriegehäusen, die eine erfindungsgemäße Durchführung aufweisen, insbesondere eine hohe Feuerbeständigkeit bei Fahrzeugunfällen zur Verfügung gestellt. Dies ist insbesondere bei einem Einsatz von Batterien, bevorzugt Li-Ionen-Batterien im Automobilbereich von Bedeutung.

## Patentansprüche

1. Durchführung für eine elektrische Speichereinrichtung mit wenigstens einem Leiter und einem Glas- oder Glaskeramikmaterial sowie einem Grundkörper (5), insbesondere in Form eines bevorzugt scheibenförmigen Metallteiles mit einer Dicke, wobei der Grundkörper (5) wenigstens eine Öffnung (7) aufweist, durch die der wenigstens eine Leiter in dem Glas- oder Glaskeramikmaterial hindurchgeführt wird, wobei der Grundkörper (5) ein Leichtmetall oder AlSiC umfasst, wobei AlSiC eine mit Al infiltrierte SiC Matrix ist, und das Glas- oder Glaskeramikmaterial derart gewählt ist, dass die Verschmelztemperatur des Glas- oder Glaskeramikmaterials mit dem Leichtmetall oder AlSiC unterhalb der Schmelztemperatur des Leichtmetalls oder AlSiC des Grundkörpers liegt,
**dadurch gekennzeichnet, dass**
die Öffnung durch die gesamte Dicke des Grundkörpers hindurchgeht und auf das Glas- oder Glaskeramikmaterial ein Deckglas oder eine Kunststoffschicht aufgebracht ist, wobei das Deckglas oder die Kunststoffschicht die chemische Beständigkeit des Glas- oder
Glaskeramikmaterials erhöht und im Falle von Glas eine ausreichende chemische Beständigkeit gegenüber Säuren und/oder gegenüber Wasser aufweist, wobei das Deckglas eine Verschmelztemperatur aufweist, die niedriger als die Schmelztemperatur des Grundkörpers ist..

2. Durchführung nach Anspruch 1, **dadurch gekennzeichnet, dass** der Leiter, insbesondere der im Wesentlichen stiftförmige Leiter, ein niedrig schmelzendes Metall ist, insbesondere ein Leichtmetall, insbesondere mit einem Schmelzpunkt im Bereich 350° bis 800°C, bevorzugt 350° bis 700°C.

3. Durchführung nach Anspruch 1 oder 2,
**dadurch gekennzeichnet, dass**
das Leichtmetall ein spezifisches Gewicht < 5kg/dm³, insbesondere im Bereich 1,0 kg/dm³ bis 3,0 kg/dm³ aufweist.

4. Durchführung nach einem der Ansprüche 1 bis 3,
**dadurch gekennzeichnet, dass** das
Leichtmetall eine elektrische Leitfähigkeit im Bereich 5·10⁶ S/m bis 50·10⁶ S/m, bevorzugt 10·10⁶ S/m bis 40 ·10⁶S/m aufweist.

5. Durchführung nach einem der Ansprüche 1 bis 4,
**dadurch gekennzeichnet, dass**
das Leichtmetall einen Ausdehnungskoeffizienten α(20° C - 300°C) im Bereich 18 · 10⁻⁶/K bis 30 · 10⁻⁶/K aufweist.

6. Durchführung nach einem der Ansprüche 1 bis 5,
**dadurch gekennzeichnet, dass**
das Leichtmetall Aluminium, Magnesium, eine Aluminiumlegierung, eine Magnesiumlegierung, Titan oder eine Titanlegierung ist.

7. Durchführung nach einem der Ansprüche 1 bis 6,
**dadurch gekennzeichnet, dass**
der Leiter, insbesondere der im Wesentlichen stiftförmige Leiter ein weiteres Material, insbesondere ein Metall, bevorzugt Kupfer, CuSiC, eine Kupferlegierung, AlSiC, Silber, eine Silberlegierung, Gold oder eine Goldlegierung umfasst, das verschieden zum Material des Grundkörpers ist.

8. Durchführung nach Anspruch 7,
**dadurch gekennzeichnet, dass**
das Glas- oder Glaskeramikmaterial (10) wenigstens zwei Glas- oder Glaskeramikmaterialien (20.1, 20.2), ein erstes Glas- oder
Glaskeramikmaterial und ein zweites Glas- oder Glaskeramikmaterial mit unterschiedlichen Ausdehnungskoeffizienten α (20° C - 300°C)umfasst, wobei das erste Glas- oder Glaskeramikmaterial (20.1) derart gewählt ist, dass der Ausdehnungskoeffizient α₁ des ersten Glas- oder Glaskeramikmaterials an den Ausdehnungskoeffizienten des Materials des Grundkörpers, insbesondere in Form eines bevorzugt scheibenförmigen Metallteiles, angepasst ist und an das zweite Glas- oder Glaskeramikmaterial derart gewählt ist,
dass der Ausdehnungskoeffizient α₂ (20° C - 300° C) des zweiten Glas- oder Glaskeramikmaterials an den Ausdehnungskoeffizienten des Materials des stiftförmigen Leiters angepasst ist.

9. Durchführung nach Anspruch 8,
**dadurch gekennzeichnet, dass**
der Ausdehnungskoeffizient α₁ des ersten Glas- oder Glaskeramikmaterials im Bereich von (16 bis 25) x 10⁻⁶ K⁻¹ im Bereich 20° C bis 300° C liegt.

10. Durchführung nach Anspruch 9,
**dadurch gekennzeichnet, dass**
das erste Glas- oder Glaskeramikmaterial (20.1) ein Glasmaterial, ausgewählt aus folgenden Glasmaterialien ist:
Silikattitanate
Sulphophosphate
Telluride
Borate
Vanadate
Fluoride
Phospate
Silikate:
alle vorgenannten Materialien optional mit
Füllstoffen zur Dehnungsanpassung
Alkalien und/oder Erdalkalien
Dotierstoffen, die im Bereich des Emissionsmaximums von Infrarotstrahlung liegen, insbesondere Fe, Cr Co, V.

11. Durchführung nach einem der Ansprüche 8 bis 10,
**dadurch gekennzeichnet, dass**
das zweite Glas- oder Glaskeramikmaterial (20.2) einen Ausdehnungskoeffizienten α₂ im Bereich von (12 bis 18) x 10⁻⁶ K⁻¹ im Bereich 20° C bis 300° C liegt.

12. Durchführung nach einem der Ansprüche 8 bis 11,
**dadurch gekennzeichnet, dass**
das Glas- oder Glaskeramikmaterial ein drittes Glas- oder Glaskeramikmaterial (20.3), insbesondere ein Phosphatglas umfasst, dass
das erste und/oder das zweite Glas- oder Glaskeramikmaterial (20.1, 20.2) abdeckt und eine hohe chemische Beständigkeit aufweist.

13. Durchführung nach einem der Ansprüche 8 bis 12,
**dadurch gekennzeichnet, dass**
das Glas- oder Glaskeramikmaterial (10) aus wenigstens einem ersten Glas- oder Glaskeramikmaterialmaterial (20.1) und einem zweiten Glasmaterial (20.2) ein Multikomponentenglas, insbesondere ein Glaspressling ist.

14. Durchführung nach einem der Ansprüche 1 bis 7,
**dadurch gekennzeichnet, dass**
das Glasmaterial eine einzige Glaszusammensetzung, insbesondere ein Phosphatglas, bevorzugt ein Phosphatglas mit nachfolgender Glaszusammensetzung in mol-% umfasst: P₂O₅ 35-50 mol-%, insbesondere 39-48 mol-%
Al₂O₃ 0-14 mol-%, insbesondere 2-12 mol-%
B₂O₃ 2-10 mol-%, insbesondere 4-8 mol-%
Na₂O 0-30 mol-%, insbesondere 0-20 mol-%
M₂O 0-20 mol-%, insbesondere 12-19 mol-%, wobei M=K, Cs, Rb
PbO 0-10 mol-%., insbesondere 0-9 mol-%
Li₂O 0-45 mol-%, insbesondere 0-40 mol-%, ganz bevorzugt 17-40 mol-%
BaO 0-20 mol-%, insbesondere 0-20 mol-%, ganz bevorzugt 5-20 mol-%
Bi₂O₃ 0-10 mol-%, insbesondere 1-5 mol-%, ganz bevorzugt 2-5 mol-%

15. Gehäuse einer elektrischen Speichereinrichtung, insbesondere einer Batterie, bevorzugt einer Lithium-Ionen-Batterie
**dadurch gekennzeichnet, dass**
das Gehäuse eine Durchführung gemäß einem der Ansprüche 1 bis 14 aufweist.

16. Elektrische Speichereinrichtung, insbesondere Batterie, bevorzugt Lithium-Ionen-Batterie, bevorzugt Lithium-Ionen-Akkumulator, ganz bevorzugt mit, einem nicht wässrigen Elektrolyten, insbesondere einem Carbonat, bevorzugt einer Carbonatmischung, die insbesondere bevorzugt Ethylencarbonat und Dimethylcarbonat umfasst, mit einem Leitsalz, insbesondere in Form von LiPF₆. mit einer Durchführung nach einem der Ansprüche 1 bis 14.

## Claims

1. Feedthrough for an electrical storage device having at least one conductor and a glass or glass-ceramic material as well as a base body (5), in particular in the form of a preferably disk-shaped metal part having a thickness, wherein the base body (5) has at least one opening (7) through which the at least one conductor is passed in the glass or glass-ceramic material, wherein the base body (5) comprises a light metal or AlSiC, wherein AlSiC is an Al-infiltrated SiC matrix, and glass or glass-ceramic material is selected such that the fusion temperature of the glass or glass-ceramic material with the light metal or AlSiC is below the fusion temperature of the light metal or AlSiC of the base body,
**characterized in that**
the opening passes through the entire thickness of the base body and a cover glass or a plastic layer is applied to the glass or glass-ceramic material, wherein the cover glass or the plastic layer increases the chemical resistance of the glass or glass-ceramic material and in the case of glass has a sufficient chemical resistance to acids and/or to water, wherein the cover glass has a fusion temperature which is lower than the fusion temperature of the base body.

2. Feedthrough according to claim 1, **characterized in that** the conductor, in particular the substantially pin-shaped conductor, is a low-melting metal, in particular a light metal, in particular having a melting point in the range of 350° to 800°C, preferably 350° to 700°C.

3. Feedthrough according to claim 1 or 2, **characterized in that** the light metal has a specific weight <5kg/dm³, especially in the range of 1.0 kg/dm³ to 3.0 kg/dm³.

4. Feedthrough according to one of claims 1 to 3, **characterized in that** the light metal has an electrical conductivity in the range 5x10⁶ S/m to 50x10⁶ S/m, preferably 10x10⁶ S/m to 40x10⁶ S/m.

5. Feedthrough according to one of claims 1 to 4, **characterized in that** the light metal has a coefficient of expansion a (20°C-300°C) in the range 18x10⁻⁶/K to 30x10⁻⁶/K.

6. Feedthrough according to one of claims 1 to 5, **characterized in that** the light metal is aluminum, magnesium, an aluminum alloy, a magnesium alloy, titanium or a titanium alloy.

7. Feedthrough according to one of claims 1 to 6, **characterized in that** the conductor, in particular the substantially pin-shaped conductor, comprises a further material, in particular a metal, preferably copper, CuSiC, a copper alloy, AlSiC, silver, a silver alloy, gold or a gold alloy, which is different from the material of the base body.

8. Feedthrough according to claim 7, **characterized in that** the glass or glass-ceramic material (10) comprises at least two glass or glass-ceramic materials (20.1, 20.2), a first glass or glass-ceramic material and a second glass or glass-ceramic material having different coefficients of expansion a (20°C-300°C), wherein the first glass or glass-ceramic material (20.1) is selected such that the coefficient of expansion a₁ of the first glass or glass-ceramic material is adapted to the coefficient of expansion of the material of the base body, in particular in the form of a preferably disk-shaped metal part, and the second glass or glass-ceramic material is selected such that the coefficient of expansion a₂ (20°C-300°C) of the second glass or glass-ceramic material is adapted to the coefficient of expansion of the material of the pin-shaped conductor.

9. Feedthrough according to claim 8, **characterized in that** the coefficient of expansion a₁ of the first glass or glass-ceramic material in the range of (16 to 25)x10⁻⁶K⁻¹ lies in the range of 20°C to 300°C.

10. Feedthrough according to claim 9, **characterized in that** the first glass or glass-ceramic material (20.1) is a glass material selected from the following glass materials:
Silicate titanates
Sulphophosphates
Tellurides
Borates
Vanadate
Fluorides
Phosphates
Silicates:
All above materials optionally with fillers for expansion adjustment Alkalis and/or alkaline earths
Dopants which lie in the range of the emission maximum of infrared radiation, in particular Fe, Cr Co, V.

11. Feedthrough according to one of claims 8 to 10, **characterized in that** the second glass or glass-ceramic material (20.2) has a coefficient of expansion a₂ in the range of (12 to 18)x10⁻⁶K⁻¹ in the range of 20°C to 300°C.

12. Feedthrough according to one of claims 8 to 11, **characterized in that** the glass or glass-ceramic material comprises a third glass or glass-ceramic material (20.3), in particular a phosphate glass, which covers the first and/or the second glass or glass-ceramic material (20.1, 20.2) and has a high chemical resistance.

13. Feedthrough according to one of claims 8 to 12, **characterized in that** the glass or glass-ceramic material (10) consists of at least a first glass or glass-ceramic material (20.1) and a second glass material (20.2) is a multicomponent glass, in particular a glass compact.

14. Feedthrough according to one of claims 1 to 7, **characterized in that** the glass material comprises a single glass composition, in particular a phosphate glass, preferably a phosphate glass having the following glass composition in mol%:
| | |
|---|---|
| P₂O₅ | 35-50 mol-%, especially 39-48 mol-% |
| Al₂O₃ | 0-14 mol-%, in particular 2-12 mol-% |
| B₂O₃ | 2-10 mol-%, in particular 4-8 mol-% |
| Na₂O | 0-30 mol-%, in particular 0-20 mol-% |
| M₂O | 0-20 mol-%, in particular 12-19 mol-%, wherein M=K, Cs, Rb |
| PbO | 0-10 mol%, in particular 0-9 mol% |
| Li₂O | 0-45 mol-%, in particular 0-40 mol-%, more preferably 17-40 mol-% |
| BaO | 0-20 mol-%, in particular 0-20 mol-%, more preferably 5-20 mol-% |
| Bi₂O₃ | 0-10 mol-%, in particular 1-5 mol-%, more preferably 2-5 mol-% |

15. Housing of an electrical storage device, in particular a battery, preferably a lithium-ion battery,
**characterized in that**
the housing has a feedthrough according to one of claims 1 to 14.

16. Electrical storage device, in particular a battery, preferably a lithium-ion battery, preferably a lithium-ion accumulator, more preferably comprising a non-aqueous electrolyte, in particular a carbonate, preferably a carbonate mixture, which in particular preferably comprises ethylene carbonate and dimethyl carbonate, having a conductive salt, in particular in the form of LiPF₆, having a feedthrough according to one of claims 1 to 14.

## Revendications

1. Traversée pour une installation d'accumulateur électrique avec au moins un conducteur et un matériau à base de verre ou de vitrocéramique ainsi qu'un corps de base (5), en particulier formé par une pièce métallique de préférence en forme de disque ayant une épaisseur, lequel corps de base (5) présente au moins une ouverture (7) à travers laquelle l'au moins un conducteur est passé à travers le matériau à base de verre ou de vitrocéramique, dans lequel le corps de base (5) contient un métal léger ou un alliage AlSiC, dans lequel l'AlSiC est une matrice de SiC infiltrée avec de l'aluminium et le matériau à base de verre ou de vitrocéramique est choisi de telle façon que la température de liaison par fusion du matériau à base de verre ou de vitrocéramique avec le métal léger ou l'AlSiC soit inférieure à la température de fusion du métal léger ou de l'AlSiC du corps de base, **caractérisée en ce que** l'ouverture traverse toute l'épaisseur du corps de base et un verre de couverture ou une couche de plastique est appliqué sur le matériau à base de verre ou de vitrocéramique, le verre de couverture ou la couche de plastique augmentant la résistance chimique du matériau à base de verre ou de vitrocéramique et, dans le cas du verre, présentant une résistance chimique suffisante aux acides et/ou à l'eau, le verre de couverture ayant une température de liaison par fusion inférieure à la température de fusion du corps de base.

2. Traversée selon la revendication 1, **caractérisée en ce que** le conducteur, en particulier le conducteur sensiblement en forme de broche, est un métal à bas point de fusion, en particulier un métal léger, en particulier avec un point de fusion compris entre 350 °C et 800 °C, de préférence entre 350 °C et 700 °C.

3. Traversée selon la revendication 1 ou 2, **caractérisée en ce que** le métal léger a un poids spécifique inférieur à 5 kg/dm³, en particulier entre 1,0 kg/dm³ et 3,0 kg/dm³.

4. Traversée selon l'une des revendications 1 à 3, **caractérisée en ce que** le métal léger présente une conductivité électrique comprise entre 5 × 10⁶ S/m à 50 × 10⁶ S/m, de préférence entre 10 × 10⁶ S/m et 40 × 10⁶ S/m.

5. Traversée selon l'une des revendications 1 à 4, **caractérisée en ce que** le métal léger présente un coefficient de dilatation α(20 °C-300 °C) compris entre 18 × 10⁻⁶/K et 30 × 10⁻⁶/K.

6. Traversée selon l'une des revendications 1 à 5, **caractérisée en ce que** le métal léger est de l'aluminium, du magnésium, un alliage d'aluminium, un alliage de magnésium, du titane ou un alliage de titane.

7. Traversée selon l'une des revendications 1 à 6, **caractérisée en ce que** le conducteur, en particulier le conducteur sensiblement en forme de broche comprend un autre matériau, en particulier un métal, de préférence du cuivre, du CuSiC, un alliage de cuivre, de l'AlSiC, de l'argent, un alliage d'argent, de l'or ou un alliage d'or, qui est différent du matériau du corps de base.

8. Traversée selon la revendication 7, **caractérisée en ce que** le matériau à base de verre ou de vitrocéramique (10) comprend au moins deux matériaux à base de verre ou de vitrocéramique (20.1, 20.2), un premier matériau à base de verre ou de vitrocéramique et un deuxième matériau à base de verre ou de vitrocéramique ayant des coefficients de dilatation α(20 °C-300 °C) différents, le premier matériau à base de verre ou de vitrocéramique (20.1) étant choisi de telle manière que son coefficient de dilatation α₁ soit adapté au coefficient de dilatation du matériau du corps de base, en particulier sous la forme d'une pièce métallique de préférence en forme de disque, et le deuxième matériau à base de verre ou de vitrocéramique étant choisi de telle manière que son coefficient de dilatation α₂(20 °C-300 °C) soit adapté au coefficient de dilatation du matériau du conducteur en forme de broche.

9. Traversée selon la revendication 8, **caractérisée en ce que** le coefficient de dilatation α₁ du premier matériau à base de verre ou de vitrocéramique est de l'ordre de (16 à 25) × 10⁻⁶K⁻¹ dans la plage de 20 °C à 300 °C.

10. Traversée selon la revendication 9, **caractérisée en ce que** le premier matériau à base de verre ou de vitrocéramique (20.1) est un matériau à base de verre, choisi parmi les matériaux à base de verre suivants :
silicates-titanates
sulfophosphates
tellurides
borates
vanadates
fluorures
phosphates
silicates,
tous les matériaux susmentionnés, avec facultativement des charges de remplissage pour l'ajustement de la dilatation
métaux alcalins et/ou alcalinoterreux
substances dopantes se situant au maximum d'émission du rayonnement infrarouge, en particulier Fe, Cr Co, V.

11. Traversée selon l'une des revendications 8 à 10, **caractérisée en ce que** le deuxième matériau à base de verre ou de vitrocéramique (20.2) présente un coefficient de dilatation α₂ de l'ordre de (12 à 18) × 10⁻⁶K⁻¹ dans la plage de 20 °C à 300 °C.

12. Traversée selon l'une des revendications 8 à 11, **caractérisée en ce que** le matériau à base de verre ou de vitrocéramique comprend un troisième matériau à base de verre ou de vitrocéramique (20.3), en particulier un verre de phosphate, qui recouvre le premier matériau à base de verre ou de vitrocéramique et/ou le deuxième (20.1, 20.2) et présente une résistance chimique élevée.

13. Traversée selon l'une des revendications 8 à 12, **caractérisée en ce que** le matériau à base de verre ou de vitrocéramique (10) est au moins un premier matériau à base de verre ou de vitrocéramique (20.1) et un deuxième matériau à base de verre (20.2) est un verre multicomposant, en particulier une pièce moulée en verre.

14. Traversée selon l'une des revendications 1 à 7, **caractérisée en ce que** le matériau à base de verre est une composition de verre unique, en particulier un verre de phosphate, de préférence un verre de phosphate ayant la composition de verre suivante, en % molaires :
| | |
|---|---|
| P₂O₅ | de 35 à 50 % molaires, en particulier de 39 à 48 % molaires |
| Al₂O₃ | de 0 à 14 % molaires, en particulier de 2 à 12 % molaires |
| B₂O₃ | de 2 à 10 % molaires, en particulier de 4 à 8 % molaires |
| Na₂O | de 0 à 30 % molaires, en particulier de 0 à 20 % molaires |
| M₂O | de 0 à 20 % molaires, en particulier de 12 à 19 % molaires, où M=K, Cs, Rb |
| PbO | de 0 à 10 % molaires, en particulier de 0 à 9 % molaires |
| Li₂O | de 0 à 45 % molaires, en particulier de 0 à 40 % molaires, de préférence de 17 à 40 % molaires |
| BaO | de 0 à 20 % molaires, en particulier de 0 à 20 % molaires, de préférence de 5 à 20 % molaires |
| Bi₂O₃ | de 0 à 10 % molaires, en particulier de 1 à 5 % molaires, de préférence de 2 à 5 % molaires |

15. Boîtier d'un dispositif accumulateur électrique, en particulier d'une batterie, de préférence d'une batterie à ions lithium, **caractérisé en ce que** le boîtier présente une traversée selon l'une des revendications 1 à 14.

16. Dispositif accumulateur électrique, en particulier batterie, de préférence batterie à ions lithium, tout particulièrement avec un électrolyte non aqueux, en particulier un carbonate, de préférence un mélange de carbonates, contenant en particulier du carbonate d'éthylène et du carbonate de diméthyle, avec un sel conducteur, de préférence sous la forme LiPF₆, avec une traversée selon l'une des revendications 1 à 14.
